# EUROPÄISCHE PATENTSCHRIFT

(11) **EP 1 546 606 B1**
(45) Veröffentlichungstag und Bekanntmachung des Hinweises auf die Patenterteilung: **28.03.2007**
(21) Anmeldenummer: 03773462.1
(22) Anmeldetag: 30.09.2003
(51) Int. Cl.: F21V 29/00, F21Y 105/00

(54) **FLACHE BELEUCHTUNGSEINHEIT**
FLAT LIGHTING UNIT
UNITE D'ECLAIRAGE PLATE

(30) Priorität: 30.09.2002 DE 10245871
(43) Veröffentlichungstag der Anmeldung: 29.06.2005
(73) Patentinhaber: SIEMENS AKTIENGESELLSCHAFT, 80333 München (DE)
(72) Erfinder: WAMMES, Klaus, 67595 Bechtheim (DE)
(86) Internationale Anmeldenummer: PCT/DE2003/003256
(87) Internationale Veröffentlichungsnummer: WO 2004/031650

(56) Entgegenhaltungen:
- US-A- 4 691 267
- US-A- 6 089 739
- PATENT ABSTRACTS OF JAPAN vol. 1997, no. 07, 31. Juli 1997 (1997-07-31) & JP 09 073810 A (FUJITSU LTD), 18. März 1997 (1997-03-18)
- PATENT ABSTRACTS OF JAPAN vol. 007, no. 149 (M-225), 30. Juni 1983 (1983-06-30) & JP 58 059843 A (TOUSHIBA DENZAI KK), 9. April 1983 (1983-04-09)

## Beschreibung

Die Erfindung betrifft eine flache Beleuchtungseinheit, insbesondere als Hintergrundbeleuchtung für ein Flachdisplay.

Flachdisplays, die nicht selbstleuchtend sind, z. B. Flüssigkristalldisplays, benötigen eine Hintergrundbeleuchtung in Form einer möglichst ebenfalls flachen Beleuchtungseinheit. Diese weist üblicherweise mehrere in der Fläche verteilte Lampen, in der Regel Leuchtstofflampen, insbesondere Kaltkathoden-Fluoreszenzlampen (CCFL = Cold Cathode Fluorescent Lamp) auf, deren Licht auf der Lichtabstrahlseite der Beleuchtungseinheit mit Hilfe von lichtführenden Elementen, Streuscheiben oder ähnlichem, gleichmäßig über die Fläche verteilt wird. Aus den Lampen rückwärtig austretendes Licht wird dabei mittels eines rückseitig angeordneten Reflektors in Richtung auf die Lichtabstrahlseite reflektiert. Da insbesondere tageslichttaugliche Flachdisplays eine hohe Lichtstärke der Beleuchtungseinheit erfordern, entsteht eine hohe Verlustwärme, die im Hinblick auf den kompakten Aufbau der flachen Beleuchtungseinheit wirksam abgeführt werden muss. Außerdem ist insbesondere bei Leuchtstofflampen, deren Helligkeit temperaturabhängig ist und bei einer bestimmten Arbeitstemperatur ein Maximum aufweist, eine möglichst konstante und übereinstimmende Arbeitstemperatur aller Lampen anzustreben, um eine über die Fläche der Lichtabstrahlseite gleichmäßige Helligkeit bei möglichst hoher Lichtausbeute zu erreichen.

Die US 6 089 739 offenbart eine Beleuchtungseinheit, bei der auf der Rückseite des Reflektors ein Kasten vorgesehen ist, welcher zwei Öffnungen aufweist, durch die Luft strömt, so dass die Beleuchtungseinheit abgekühlt wird.

Der Erfindung liegt daher die Aufgabe zugrunde, bei einer flachen Beleuchtungseinheit mit hoher Lichtausbeute und gleichmäßiger Helligkeitsverteilung eine effektive Wärmeabfuhr zu erreichen, ohne dass dazu aktive Mittel, wie z. B. Lüfterräder, erforderlich sind.

Gemäß der Erfindung wird die Aufgabe durch eine flache Beleuchtungseinheit, insbesondere als Hintergrundbeleuchtung für ein Flachdisplay, gelöst, welche im Wesentlichen in senkrechter Arbeitslage betrieben wird, mit Lampen, die auf ihrer von der Lichtabstrahlseite der Beleuchtungseinheit abgewandten Rückseite in engem thermischen Kontakt außen an einer gut wärmeleitenden Wand eines Hohlkastens anliegen, wobei der Hohlkasten eine zu der wärmeleitenden Wand im Wesentlichen parallele Rückwand aufweist, welche über ihre Fläche verteilte Öffnungen enthält, und wobei die in Bezug auf die senkrechte Arbeitslage obere und untere Wand des Hohlkastens jeweils in einem zur Rückwand nahen Bereich weitere Öffnungen und in den übrigen, zur wärmeleitenden Wand nahen Bereichen keine Öffnungen enthalten.

Die gut wärmeleitende Wand, an der die Lampen in engem thermischen Kontakt anliegen, bewirkt einen Temperaturausgleich zwischen den Lampen, so dass diese alle etwa dieselbe Arbeitstemperatur aufweisen und daher nicht unterschiedlich hell leuchten. Die Lampen liegen dabei vorzugsweise unter Zwischenlage einer Reflexionsschicht an der wärmeleitenden Wand an, wobei die Reflexionsschicht als Beschichtung auf der Wand oder als eine separate dünne Folie ausgebildet sein kann.

Die von den Lampen aufgeheizte wärmeleitende Wand strahlt die Wärme in den Innenraum des Hohlkastens ab und erwärmt die darin befindliche Luft. Um dabei eine möglichst effektive Wärmeabstrahlung durch die wärmeleitende Wand zu erreichen, ist diese auf ihrer dem Inneren des Hohlkastens zugewandten Seite vorzugsweise schwarz.

Die in dem Hohlkasten erwärmte Luft entweicht wie in einem Kamin durch die Öffnungen in der oberen Seitenwand des Hohlkastens, wobei durch die Öffnungen in der unteren Seitenwand Luft von außen nachströmt. Da die Öffnungen in der oberen und unteren Seitenwand nur im rückwandnahen Bereich ausgebildet sind, streicht die durch den Kamineffekt nach oben geförderte Luft unmittelbar an der Rückwand des Hohlkastens entlang. Die in der Rückwand enthaltenen Öffnungen verhindern dabei, dass sich die Luftströmung laminar ausbildet und an der Grenzfläche der Rückwand zu null wird. Statt dessen bilden sich an den Kanten der Öffnungen Luftwirbel aus, die selbst wie Lüfter wirken; die Luftströmung an der Grenzfläche zur Rückwand ist ungleich null, so dass auch hier eine Wärmeabfuhr über die Rückwand erfolgt. Zusätzlich zu den Öffnungen kann die Rückwand des Hohlkörpers Vorsprünge aufweisen, die in sein Inneres hineinragen und ebenfalls zur Luftverwirbelung beitragen. Je mehr Verlustwärme die Lampen erzeugen und je heißer dabei die wärmeleitende Wand wird, um so größer ist der Kamineffekt und die damit erreichte Wärmeabfuhr, so dass dadurch die Lampentemperatur in etwa konstant geregelt wird.

Um eine gute Kaminwirkung zu erhalten, ist die Gesamtfläche aller Öffnungen in der Rückwand vorzugsweise kleiner als die übrige Fläche der Rückwand. Die vorzugsweise als senkrecht ausgerichtete Schlitze ausgebildeten Öffnungen in der Rückwand und der oberen bzw. unteren Seitenwand können dort, wo die Rückwand und die obere bzw. untere Seitenwand unmittelbar aneinander stoßen, ineinander übergehen; d. h., die dortigen Öffnungen liegen mit einem Teil in der Rückwand und mit ihrem anderen Teil in der jeweiligen Seitenwand.

Im Weiteren ist der Hohlkasten vorzugsweise zweiteilig ausgebildet, wobei die wärmeleitende Wand das eine Teil und die übrigen Wände des Hohlkastens das andere Teil bilden und aus einem vergleichsweise schlecht wärmeleitenden Material bestehen. So können beispielsweise die gut wärmeleitende Wand aus Kupfer oder Aluminium und die übrigen Wände des Hohlkastens aus Edelstahl bestehen. Damit wird erreicht, dass die Temperatur der Rückwand geringer als die der wärmeleitenden Wand ist, so dass zwischen beiden Wänden ein Temperaturgefälle entsteht, das wegen der aufsteigenden und dabei zunehmend erwärmten Luft von unten nach oben abnimmt und den Kamineffekt vergrößert. Der Abstand zwischen beiden Wänden kann daher sehr gering sein, ohne dass es zu einer thermischen Verstopfung des Kamins kommt.

Wenn es sich bei den Lampen um Leuchtstoffröhren handelt, die mit Wechselspannungen höherer Frequenz, beispielsweise 100 kHz, angesteuert werden, so machen sich zwischen den Lampen und der gut wärmeleitenden und damit in der Regel metallischen Wand des Hohlkastens, an dem die Lampen in engem thermischen Kontakt anliegen, parasitäre Kapazitäten bemerkbar, die den Lampen einen erheblichen Anteil ihrer Ansteuerleistung entziehen. Entgegen der bisher üblichen hochimpedanten Ansteuerung der Leuchtstofflampen über einen strombegrenzenden Ballastkondensator sind die Leuchtstofflampen daher vorzugsweise an einer Treiberschaltung mit niedriger Ausgangsimpedanz angeschlossen. Dazu sind die Leuchtstofflampen in vorteilhafter Weise unmittelbar, d. h. ohne Ballastkondensator, an einem induktiven Ausgangsübertrager der Treiberschaltung angeschlossen, wobei der Ausgangsübertrager Mittel zur Begrenzung der von ihm übertragenen Energie aufweist.

Zur weiteren Erläuterung der Erfindung wird im Folgenden auf die Figuren der Zeichnung Bezug genommen; im Einzelnen zeigen:
- Figur 1: ein Ausführungsbeispiel der erfindungsgemäßen Beleuchtungseinheit im Querschnitt in Verbindung mit einem Flachdisplay,
- Figur 2: eine rückseitige Ansicht der Beleuchtungseinheit und
- Figur 3: ein Beispiel für die Ansteuerung der in der Beleuchtungseinheit verwendeten Lampen.

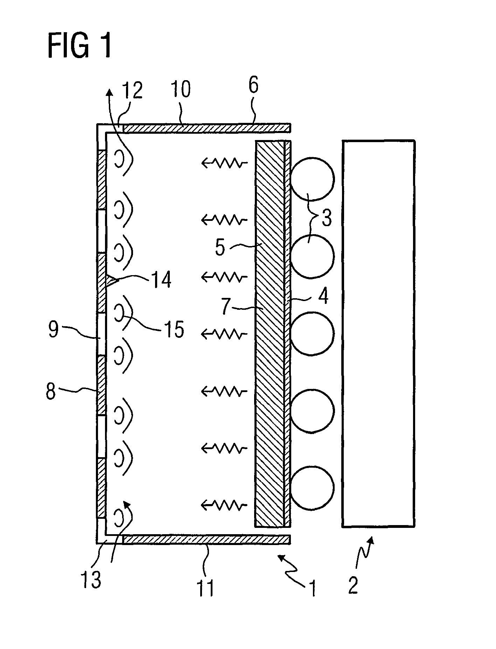

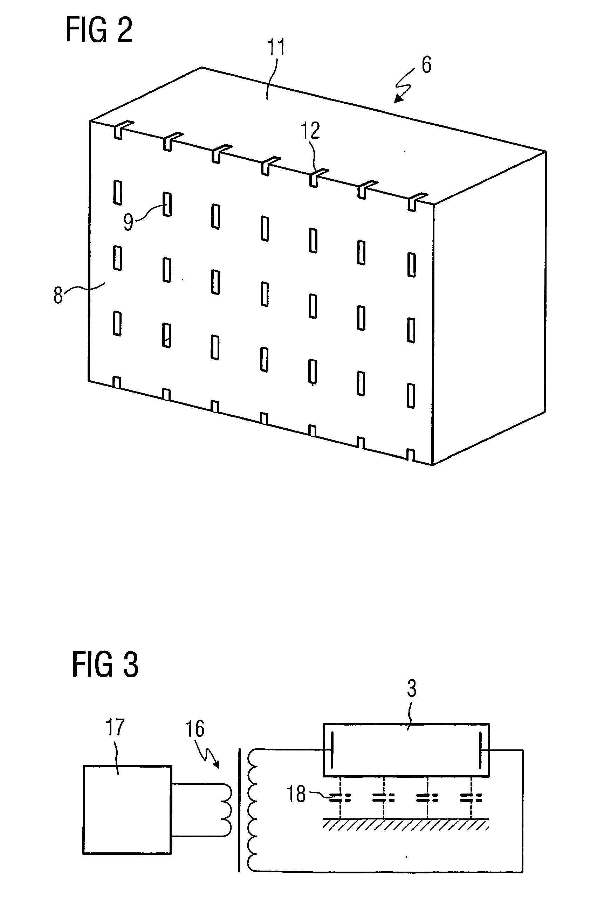

Figur 1 zeigt in schematischer Darstellung eine flache Beleuchtungseinheit 1 als Hintergrundbeleuchtung für ein Flachdisplay 2, hier ein Flüssigkristalldisplay. Die Beleuchtungseinheit 1 und das Flachdisplay 2 werden dabei im Wesentlichen in senkrechter Arbeitslage betrieben, so wie dies hier dargestellt ist. Die Beleuchtungseinheit 1 weist auf ihrer Lichtabstrahlseite mehrere über eine Fläche verteilte und zueinander parallele Lampen 3, hier Kaltkathoden-Fluoreszenzröhren, auf, die rückseitig unter Zwischenlage einer Reflexionsschicht 4 in engem thermischen Kontakt an einer gut wärmeleitenden Wand 5 eines Hohlkastens 6 anliegen, dessen Rückansicht in Figur 2 zu sehen ist. Die wärmeleitende Wand 5 bildet einen Teil des zweiteilig aufgebauten Hohlkastens 6 und besteht aus einer vergleichsweise dicken Aluminiumplatte, die auf ihrer dem Inneren des Hohlkastens 6 zugewandten Seite 7 schwarz eingefärbt oder beschichtet ist. Der andere Teil des Hohlkastens 6 besteht aus vergleichsweise schlecht wärmeleitendem Material, hier Edelstahl, und umfasst eine zu der wärmeleitenden Wand 5 parallele Rückwand 8 sowie zwischen den beiden Wänden 5 und 8 liegende Seitenwände 10, 11. In der Rückwand 8 sind Öffnungen 9 und in der oberen Seitenwand 10 und der unteren Seitenwand 11 weitere Öffnungen 12 bzw. 13 ausgebildet, wobei die weiteren Öffnungen 12 und 13 nur in den zur Rückwand 8 nahen Bereichen der Seitenwände 10 und 11 enthalten sind. Die Gesamtfläche der hier in Form von senkrechten Schlitzen ausgebildeten Öffnungen 9 in der Rückwand 8 ist kleiner als die übrige Fläche der Rückwand 8. Dort, wo die Rückwand 8 und die obere und untere Seitenwand 10 bzw. 11 aneinander stoßen, sind die Öffnungen 9 in der Rückwand 8 und die weiteren Öffnungen 12 bzw. 13 in der betreffenden Seitenwand 10 bzw. 11 ineinander übergehend ausgebildet; d. h., sie liegen mit ihrem einen Teil in der Rückwand 8 und mit ihrem anderen Teil in der betreffenden Seitenwand 10 bzw. 11. Zusätzlich zu den Öffnungen 9 in der Rückwand 8 kann diese hier mit 14 angedeutete Vorsprünge aufweisen, die in das Innere des Hohlkastens 6 hineinragen. Diese Vorsprünge 14 können beispielsweise durch Aufbiegen der Kanten der Öffnungen 9 in das Innere des Hohlkastens 6 hinein gebildet werden.

Die gut wärmeleitende Wand 5 sorgt für einen Temperaturausgleich zwischen den Lampen 3 und strahlt über ihre schwarze Seite 7 die von den Lampen 3 erzeugte Verlustwärme in das Innere des Hohlkastens 6 ab. Dadurch wird die in dem Hohlkasten 6 befindliche Luft erwärmt, die aufgrund der rückwandnahen Anordnung der weiteren Öffnungen 12 und 13 in der oberen und unteren Seitenwand 10 bzw. 11 an der Rückwand 8 entlang aufsteigt. Die erwärmte Luft verlässt den Hohlkasten 6 durch die weiteren Öffnungen 12 in der oberen Seitenwand 10, während durch die weiteren Öffnungen 13 in der unteren Seitenwand 11 Luft von außen nachströmt. Aufgrund der Öffnungen 9 in der Rückwand 8 ist die an dieser entlangströmende Luftströmung 15 nicht laminar, sondern verwirbelt, was den Wärmeübergang zwischen Rückwand 8 und erwärmter Luft verbessert.

Figur 3 zeigt schematisch die Ansteuerung der Kaltkathoden-Fluoreszenzlampen 3. Wie am Beispiel einer einzelnen Lampe 3 gezeigt ist, sind diese ohne Ballastkondensator unmittelbar an einem induktiven Ausgangsübertrager 16 einer Treiberschaltung 17 angeschlossen. Die Ansteuerung der Lampe 3 erfolgt dadurch niederohmig, etwa in der Größenordnung von 10 Ohm, so dass die parasitären Kapazitäten 18 zwischen der Lampe 3 und der gut wärmeleitenden Wand 5 nicht wirksam werden. Zur Strombegrenzung weist der Ausgangsübertrager 16 feldabschwächende Mittel auf; beispielsweise handelt es sich bei dem Ausgangsübertrager 16 um einen Streufeldtransformator oder um einen Transformator, wie er aus der DE 195 33 323 A1 bekannt ist.

## Patentansprüche

1. Flache Beleuchtungseinheit, insbesondere als Hintergrundbeleuchtung für ein Flachdisplay (2), welche im Wesentlichen in senkrechter Arbeitslage betrieben wird, mit Lampen (3), die auf ihrer von der Lichtabstrahlseite der Beleuchtungseinheit (1) abgewandten Rückseite in engem thermischen Kontakt außen an einer gut wärmeleitenden Wand (5) eines Hohlkastens (6) anliegen, wobei der Hohlkasten (6) eine zu der wärmeleitenden Wand (5) im Wesentlichen parallele Rückwand (8) aufweist, **dadurch gekennzeichnet, dass** die Rückwand über ihre Fläche verteilte Öffnungen (9) enthält, und wobei die in Bezug auf die senkrechte Arbeitslage obere und untere Seitenwand (10, 11) des Hohlkastens (6) jeweils in einem zur Rückwand (8) nahen Bereich weitere Öffnungen (12, 13) und in den übrigen, zur wärmeleitenden Wand (5) nahen Bereichen keine Öffnungen enthalten.

2. Flache Beleuchtungseinheit nach Anspruch 1, **dadurch gekennzeichnet, dass** die Lampen (3) unter Zwischenlage einer Reflexionsschicht (4) an der wärmeleitenden Wand (5) anliegen.

3. Flache Beleuchtungseinheit nach Anspruch 1 oder 2, **dadurch gekennzeichnet, dass** die wärmeleitende Wand (5) auf ihrer dem Inneren des Hohlkastens (6) zugewandten Seite (7) schwarz ist.

4. Flache Beleuchtungseinheit nach einem der vorangehenden Ansprüche, **dadurch gekennzeichnet, dass** die Rückwand (8) des Hohlkastens (6) in dessen Inneres hineinragende Vorsprünge (14) aufweist.

5. Flache Beleuchtungseinheit nach einem der vorangehenden Ansprüche, **dadurch gekennzeichnet, dass** die Gesamtfläche aller Öffnungen (9) in der Rückwand (8) kleiner als die übrige Fläche der Rückwand (8) ist.

6. Flache Beleuchtungseinheit nach einem der vorangehenden Ansprüche, **dadurch gekennzeichnet, dass** die Öffnungen (9, 12, 13) in den Wänden (8, 10, 11) des Hohlkastens (6) als Schlitze, insbesondere senkrecht ausgerichtete Schlitze, ausgebildet sind.

7. Flache Beleuchtungseinheit nach einem der vorangehenden Ansprüche, **dadurch gekennzeichnet, dass** in den Bereichen, in denen die Rückwand (8) und die obere bzw. die untere Seitenwand (10, 11) unmittelbar aneinander grenzen, die dort liegenden Öffnungen (9, 12, 13) in der Rückwand (8) und der oberen bzw. der unteren Seitenwand (10, 11) ineinander übergehen.

8. Flache Beleuchtungseinheit nach einem der vorangehenden Ansprüche, **dadurch gekennzeichnet, dass** der Hohlkasten (6) zweiteilig ausgebildet ist, wobei die wärmeleitende Wand (5) das eine Teil und die übrigen Wände (8, 10, 11) des Hohlkastens (6) das andere Teil bilden und aus einem vergleichsweise schlecht wärmeleitenden Material bestehen.

9. Flache Beleuchtungseinheit nach einem der vorangehenden Ansprüche, **dadurch gekennzeichnet, dass** es sich bei den Lampen (3) um Leuchtstofflampen handelt und dass diese an einer Treiberschaltung (17) mit niedriger Ausgangsimpedanz angeschlossen sind.

10. Flache Beleuchtungseinheit nach Anspruch 9, **dadurch gekennzeichnet, dass** die Leuchtstofflampen (3) unmittelbar an einem induktiven Ausgangsübertrager (16) der Treiberschaltung (17) angeschlossen sind und dass der Ausgangsübertrager (16) Mittel (19) zur Begrenzung der von ihm übertragenen Energie aufweist.

## Claims

1. Flat lighting unit, in particular as backlighting for a flat display (2), which unit is operated substantially in a vertical working position, having lamps (3), which, on their rear side remote from the light emission side of the lighting unit (1), bear, in close thermal contact on the outside, against a very thermally conductive wall (5) of a hollow box (6), the hollow box (6) having a rear wall (8), which is substantially parallel to the thermally conductive wall (5), **characterized in that** the rear wall contains openings (9) distributed over its surface, and the upper and lower (in relation to the vertical working position) side walls (10, 11) of the hollow box (6) each containing further openings (12, 13) in a region close to the rear wall (8) and no openings in the remaining regions close to the thermally conductive wall (5).

2. Flat lighting unit according to Claim 1, **characterized in that** the lamps (3), with the interposition of a reflective layer (4), bear against the thermally conductive wall (5).

3. Flat lighting unit according to Claim 1 or 2, **characterized in that** the thermally conductive wall (5) is black on its side (7) facing the interior of the hollow box (6) .

4. Flat lighting unit according to one of the preceding claims, **characterized in that** the rear wall (8) of the hollow box (6) has projections (14), which protrude into its interior.

5. Flat lighting unit according to one of the preceding claims, **characterized in that** the total surface area of all of the openings (9) in the rear wall (8) is smaller than the remaining surface area of the rear wall (8).

6. Flat lighting unit according to one of the preceding claims, **characterized in that** the openings (9, 12, 13) in the walls (8, 10, 11) of the hollow box (6) are in the form of slits, in particular vertically aligned slits.

7. Flat lighting unit according to one of the preceding claims, **characterized in that**, in the regions in which the rear wall (8) and the upper and the lower side wall (10, 11) directly adjoin one another, the openings (9, 12, 13) located there in the rear wall (8) and in the upper or the lower side wall (10, 11) merge with one another.

8. Flat lighting unit according to one of the preceding claims, **characterized in that** the hollow box (6) has a two-part design, the thermally conductive wall (5) forming one part and the remaining walls (8, 10, 11) of the hollow box (6) forming the other part and comprising a comparatively poorly thermally conductive material.

9. Flat lighting unit according to one of the preceding claims, **characterized in that** the lamps (3) are fluorescent lamps, and **in that** they are connected to a driver circuit (17) having a low output impedance.

10. Flat lighting unit according to Claim 9, **characterized in that** the fluorescent lamps (3) are connected directly to an inductive output transformer (16) of the driver circuit (17), and **in that** the output transformer (16) has means (19) for limiting the power transformed by it.

## Revendications

1. Unité d'éclairage plate, notamment pour l'éclairage par l'arrière d'un affichage (2) plat, qui fonctionne sensiblement dans une position de travail verticale, comprenant des lampes (3) qui s'appliquent sur leur côté arrière éloigné du côté d'émission de lumière de l'unité (1) d'éclairage en contact thermique étroit à l'extérieur sur une paroi (5) bonne conductrice de la chaleur d'un caisson (6) creux, le caisson (6) creux ayant une paroi (8) arrière sensiblement parallèle à la paroi (5) bonne conductrice de la chaleur, **caractérisée en ce que** la paroi arrière a des ouvertures (9) réparties sur sa surface et les parois (10, 11) supérieure et inférieure, par rapport à la position de travail verticale du caisson (6) creux, ont d'autres ouvertures (12, 13) dans une région proche de la paroi (8) arrière et n'ont pas d'ouverture dans les autres régions proches de la paroi (5) conductrice de la chaleur.

2. Unité d'éclairage plate suivant la revendication 1, **caractérisée en ce que** les lampes (3) s'appliquent avec interposition d'une couche (4) réfléchissante à la paroi (5) conductrice de la chaleur.

3. Unité d'éclairage plate suivant la revendication 1 ou 2, **caractérisée en ce que** la paroi (5) conductrice de la chaleur est noire sur son côté tourné vers l'intérieur du caisson (6) creux.

4. Unité d'éclairage plate suivant l'une des revendications précédentes, **caractérisée en ce que** la paroi (8) arrière du caisson (6) creux a, à l' intérieur, des saillies (14) vers l'intérieur.

5. Unité d'éclairage plate suivant l'une des revendications précédentes, **caractérisée en ce que** toute la surface de toutes les ouvertures (9) de la paroi (8) arrière est plus petite que le reste de la surface de la paroi (8) arrière.

6. Unité d'éclairage plate suivant l'une des revendications précédentes, **caractérisée en ce que** les ouvertures (9, 12, 13) des parois (8, 10, 11) du caisson (6) creux sont constituées sous la forme de fentes, notamment de fentes dirigées verticalement.

7. Unité d'éclairage plate suivant l'une des revendications précédentes, **caractérisée en ce que**, dans les régions dans lesquelles la paroi (8) arrière et la paroi (10, 11) latérale supérieure ou inférieure sont directement voisines, les ouvertures (9, 12, 13) qui s'y trouvent de la paroi (8) arrière et de la paroi (10, 11) latérale supérieure ou inférieure se transforment l'une en l'autre.

8. Unité d'éclairage plate suivant l'une des revendications précédentes, **caractérisée en ce que** le caisson (6) creux est constitué en deux parties, la paroi (5) conductrice de la chaleur formant l'une des parties et les autres parois (8, 10, 11) du caisson (6) creux l'autre partie, et elles sont constituées en un matériau relativement mauvais conducteur de la chaleur.

9. Unité d'éclairage plate suivant l'une des revendications précédentes, **caractérisée en ce que** les lampes (3) sont des lampes fluorescentes, et **en ce qu'**elles sont raccordées à un circuit (17) d'attaque à basse impédance de sortie.

10. Unité d'éclairage plate suivant la revendication 9, **caractérisée en ce que** les lampes (3) fluorescentes sont raccordées directement à un transmetteur (16) inductif de sortie du circuit (17) d'attaque, et **en ce que** le transmetteur (16) de sortie a des moyens (19) de limitation de l'énergie qu'il transmet.
